# EUROPEAN PATENT APPLICATION

(11) **EP 4 235 621 A1**
(43) Date of publication of application: **30.08.2023**
(21) Application number: 21898633.9
(22) Date of filing: 25.11.2021
(51) Int. Cl.: G08G 1/14, G08G 1/123, G06Q 50/30, H04N 5/232, H04N 7/18, G08B 13/196, G06T 7/292, G06T 7/11, G06T 7/187

(54) **MULTI-SENSOR HANDOVER SYSTEM CAPABLE OF TRACKING MOVING OBJECT, AND PARKING SERVICE PROVISION METHOD IN SAME**

(30) Priority: 30.11.2020 KR 20200164898; 30.11.2020 KR 20200164899; 30.11.2020 KR 20200164900
(71) Applicant: Lightvision Corp., Seoul 04793 (KR)
(72) Inventor: JEONG, Jin Ha, Yongin-si, Gyeonggi-do 16960 (KR); RA, Moon Soo, Bucheon-si, Gyeonggi-do 14539 (KR)
(74) Representative: BCKIP Part mbB
(86) International application number: PCT/KR2021/017496
(87) International publication number: WO 2022/114807

(57) **Abstract**

A handover system for tracking a moving object and a method of providing a parking service in the same are disclosed. A computing device comprises a communication unit which is a communication path with a first sensor for monitoring a first handover area and a second sensor for monitoring a second handover area, and a handover unit configured to obtain a first image from the first sensor, obtain a second image from the second sensor, detect an exit of a moving object from the first handover area through the obtained first image, detect an entrance of a moving object to the second handover area through the obtained second image and discriminate whether or not the moving object entered the second handover area is the same moving object as the moving object exited from the first handover area by using the detected entrance of the moving object and the detected exit of the moving object. Here, the second handover area is matched with the first handover area.

## Description

### TECHNICAL FIELD

The disclosure relates to a handover system for tracking a moving object and a method of operating the same.

The disclosure relates to a multiple sensor handover system and a method of operating the same.

### BACKGROUND ART

The conventional system tracks a vehicle in an image obtained by a camera, and thus it regards the vehicle moving in an area monitored by another camera as another vehicle not the vehicle detected by the camera if the vehicle moves into the area monitored by another camera. As a result, the system can detect only limited movement of the vehicle. That is, the system can't track a vehicle moving in a place monitored by multiple cameras.

### SUMMARY

The disclosure is to provide a handover system for tracking a moving object and a method of operating the same.

The disclosure is to provide a multiple sensor handover system and a method of providing a parking service in the same.

A computing device according to an embodiment of the disclosure includes a communication unit which is a communication path with a first sensor for monitoring a first handover area and a second sensor for monitoring a second handover area; and a handover unit configured to obtain a first image from the first sensor, obtain a second image from the second sensor, detect an exit of a moving object from the first handover area through the obtained first image, detect an entrance of a moving object to the second handover area through the obtained second image and discriminate whether or not the moving object entered the second handover area is the same moving object as the moving object exited from the first handover area by using the detected entrance of the moving object and the detected exit of the moving object. Here, wherein the second handover area is matched with the first handover area.

A sensor used in a handover system for obtaining a first image by monitoring a first handover area according to an embodiment of the disclosure comprises a communication unit which is a communication path with another sensor for monitoring a second handover area; and a handover unit configured to obtain a second image from the another sensor, detect an exit of a moving object from one of the handover areas by using one of the obtained images, detect an entrance of the moving object to the other handover area of the handover areas by using another image of the obtained images, and discriminate whether or not the moving object entered the other handover area is the same moving object as the moving object exited from the one of the handover areas by using the detected exit of the moving object and the detected entrance of the moving object. Here, the handover areas are matched each other.

A computing device according to another embodiment of the disclosure comprises a communication unit which is a communication path with a first sensor for monitoring a first handover area, a second sensor for monitoring a second handover area or a parking sensor for monitoring parking location; and a parking unit configured to obtain a number of a moving object when the moving object is entered and receive parking information of the moving object from the parking sensor when the moving object is parked in a parking space after moving through the handover areas. Here, the same identification code as an identification code set to the entered moving object or an identification code including a sub identification code which is identical to the identification code set to the entered moving object is given to the moving object moving through the handover areas or the parked moving object.

A handover system and a method of proving a parking service in the same according to an embodiment of the disclosure may discriminate through the exit of the moving object from the first handover area and the entrance of the moving object to the second handover area whether or not a moving object entered in a second handover area is identical to a moving object exited from a first handover area. They may give an identification code set to the moving object exited from the first handover area to the moving object entered in the second handover area when the moving object entered in the second handover area is identical to the moving object exited from the first handover area.

That is, the handover system may perform a handover through an algorithm which discriminates whether or not two moving objects are near temporally and spatially. The handover is achieved in only preset handover areas, thus the handover using multiple cameras may be realized with low computational cost.

Additionally, the multiple sensor handover system and the method of providing the parking service in the same may detect a moving path of the moving object through a handover process, detect parking information such as parking location of the moving object, etc. by using a parking sensor, and provide various parking service by using the detected moving path or the detected parking information.

### BRIEF DESCRIPTION OF DRAWINGS

Example embodiments of the present disclosure will become more apparent by describing in detail example embodiments of the present disclosure with reference to the accompanying drawings, in which:
FIG. 1 and FIG. 2 are views illustrating a handover technique according to an embodiment of the disclosure;
FIG. 3 is a view illustrating a handover process using queue according to an embodiment of the disclosure;
FIG. 4 is a view illustrating a handover technique according to another embodiment of the disclosure;
FIG. 5 is a view illustrating a handover technique in a parking lot according to an embodiment of the disclosure;
FIG. 6 is a view illustrating a handover technique according to another embodiment of the disclosure;
FIG. 7 is a view illustrating a handover technique according to still another embodiment of the disclosure;
FIG. 8 is a view illustrating a handover technique according to still another embodiment of the invention;
FIG. 9 is a view illustrating a handover technique according to still another embodiment of the disclosure;
FIG. 10 is a view illustrating a handover technique according to still another embodiment of the disclosure;
FIG. 11 is a block diagram illustrating schematically a handover server according to an embodiment of the disclosure;
FIG. 12 is a block diagram illustrating a handover system according to still another embodiment of the disclosure;
FIG. 13 is a flowchart illustrating a process of providing a parking service using a handover system according to an embodiment of the disclosure;
FIG. 14 is a flowchart illustrating a process of providing a parking service using a handover system according to another embodiment of the disclosure;
FIG. 15 is a flowchart illustrating a process of guiding a parking using a handover system according to still another embodiment of the disclosure; and
FIG. 16 is a block diagram illustrating a computing device according to an embodiment of the disclosure.

### DETAILED DESCRIPTION

In the present specification, an expression used in the singular encompasses the expression of the plural, unless it has a clearly different meaning in the context. In the present specification, terms such as "comprising" or "including," etc., should not be interpreted as meaning that all of the elements or operations are necessarily included. That is, some of the elements or operations may not be included, while other additional elements or operations may be further included. Also, terms such as "unit," "module," etc., as used in the present specification may refer to a part for processing at least one function or action and may be implemented as hardware, software, or a combination of hardware and software.

The disclosure relates to a handover system and a method of providing a parking service in the same. The handover system and method may set handover areas monitored by sensors, e.g. cameras, verify sameness of a moving object with low computational cost when the moving object moves through the set handover areas, and give the same identification code (for example, serial number or character string) to the moving object to track the moving object. Here, the moving object is for example a vehicle.

Fundamentally, a camera gives different identification code to each of the handover areas. As a result, it is impossible to track the moving object if different identification code is set to the same moving object. Accordingly, the handover system may give the same identification code to the moving object in matched handover areas when it is determined that the same moving object moves through the matched handover areas. Therefore, the handover system may track the moving object.

In an embodiment, the handover system may discriminate sameness of the moving object by comparing information of an exit queue for recording exit of the moving object with information of an entrance queue for recording entrance of the moving object.

In another aspect, the handover system does not require detailed information such as kind, a number of the moving object, etc., and may discriminate the sameness of the moving object through the exit and the entrance of the moving object in the handover areas.

Accordingly, the handover system may perform accurately a handover without using machine learning, and thus realize a multiple sensor handover and the tracking of the moving object with low computational cost (data throughput).

Additionally, the conventional system can't track a vehicle if kind or a number of the car is known. However, the handover system of the disclosure may track correctly the moving object under the condition that detailed information such as kind or a number of the moving object is not known.

Furthermore, the multiple sensor handover system and the method of providing the parking service in the same according to the disclosure may detect parking information such parking location of the moving object parked after moving through the handover areas, etc., and provide various parking service to a user by using the detected parking information.

Hereinafter, various embodiments of the disclosure will be described in detail with reference to accompanying drawings. It is assumed that the moving object is a vehicle, for convenience of description.

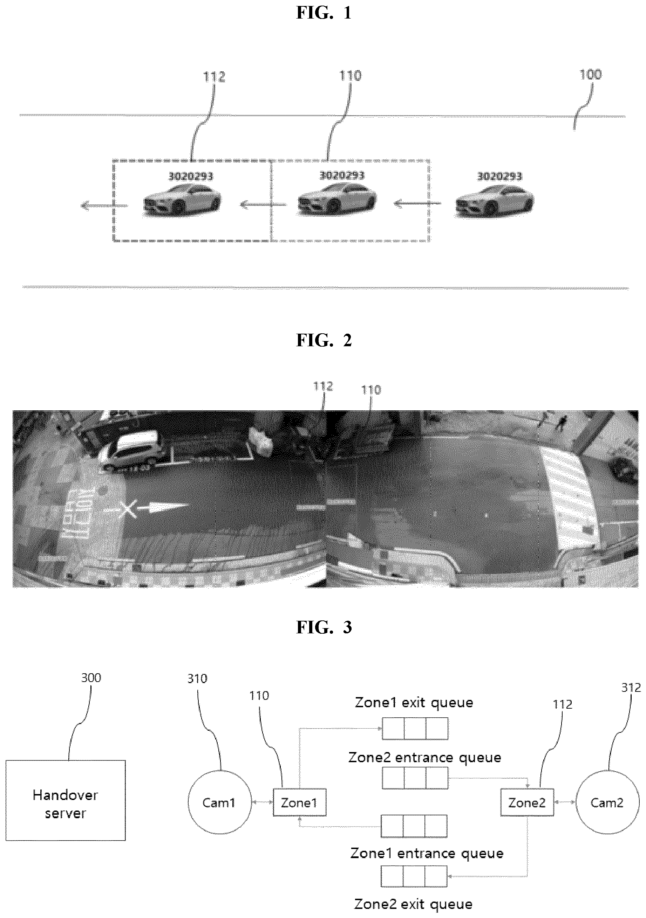

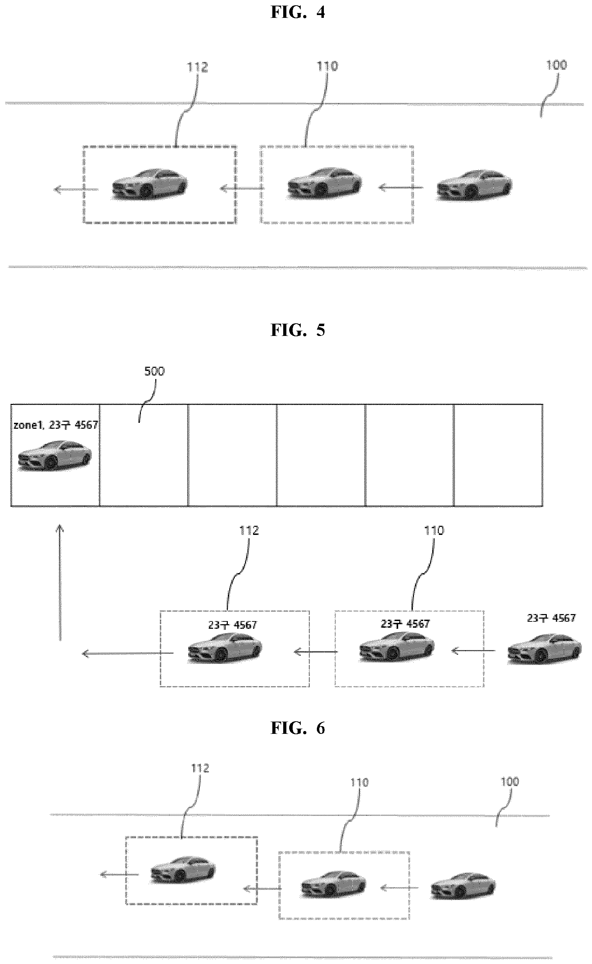

FIG. 1 and FIG. 2 are views illustrating a handover technique according to an embodiment of the disclosure, and FIG. 3 is a view illustrating a handover process using queue according to an embodiment of the disclosure. FIG. 4 is a view illustrating a handover technique according to another embodiment of the disclosure, and FIG. 5 is a view illustrating a handover technique in a parking lot according to an embodiment of the disclosure.

In FIG. 1, the handover system of the present embodiment may set handover areas 110 and 112 on a road 100.

Here, a first handover area 110 is an area monitored by a first sensor (first image obtaining device), e.g. a first camera, and a second handover area 112 is an area monitored by a second sensor (second image obtaining device), e.g. a second camera. On the other hand, the handover areas 110 and 112 may have various polygon shapes. For example, the handover areas 110 and 112 may have a triangular shape or a rectangular shape.

Additionally, as shown in FIG. 2, the first handover area 110 may correspond to a part of an area monitored by the first camera, and the second handover area 112 may correspond to a part of an area monitored by the second camera. Of course, the first handover area 110 may correspond to a whole of the area monitored by the first camera, and the second handover area 112 may correspond to a whole of the area monitored by the second camera. That is, the first handover area 110 corresponds to a part or a whole of the area monitored by the first camera, and the second handover area 112 corresponds to a part or a whole of the area monitored by the second camera.

In an embodiment, the handover areas 110 and 112 may be matched each other. For example, the second handover area 112 may be set to a handover area matched with the first handover area 110, wherein it is highly possible that a vehicle exited from the first handover area 110 enters the second handover area 112. That is, the matched handover areas 110 and 112 may be near areas temporally and spatially

Generally, the handover areas 110 and 112 may be side by side disposed in a longitudinal direction of the road 100 as shown in FIG. 1. Of course, the handover areas 110 and 112 may be side by side disposed along a curved road in the curved road not a straight road. In another aspect, the handover areas 110 and 112 may be side by side disposed in close proximity in a driving direction of the vehicle.

However, the handover areas 110 and 112 may be contacted each other as shown in FIG. 1, be separated each other, or be overlapped.

Hereinafter, an example of a handover process using the handover areas 110 and 112 in multiple sensor environments will be described in detailed with reference to accompanying drawing FIG. 3.

A first sensor (Cam1) 310 may monitor the first handover area 110 and transmit the monitored result (image) to a handover server (computing device) 300. The second sensor (Cam2) 312 may monitor the second handover area 112 and transmit the monitored result (image) to the handover sensor 300.

In an embodiment, the handover server 300 may detect a vehicle exited from the first handover area 110 through analysis of the image transmitted from the first sensor 310 and input (record) information concerning the detected vehicle in a Zone1 exit queue. For example, the handover server 300 may extract an object from the image by using various methods, compare a shape of the extracted object with a shape of pre-stored vehicle, and detect an object corresponding to the vehicle through the compared result. For another example, the handover server 300 may extract a feature point from the extracted object, compare the extracted feature point with preset feature point, and discriminate whether or not the object is the vehicle.

Furthermore, the handover server 300 may detect a vehicle entered the second handover area 112 through analysis of the image transmitted from the second sensor 312, and input information concerning the detected vehicle in a Zone2 entrance queue.

Here, the Zone1 exit queue and the Zone2 entrance queue may be an imaginary queue set by the handover server 300, or correspond to a specific space of a memory.

Subsequently, the handover server 300 may discriminate whether or not the vehicle entered the second handover area 112 corresponds to the vehicle exited from the first handover area 110 by comparing the Zone1 exit queue with the Zone2 entrance queue.

In an embodiment, the handover server 300 may determine that vehicles of the Zone1 exit queue and the Zone2 entrance queue near temporally and spatially are the same vehicle. Of course, various modifications are possible as long as sameness of the vehicle is discriminated by using the Zone1 exit queue and the Zone2 entrance queue. However, it will be immediately obvious to those skilled in the art that these modifications belong to the scope of the present invention.

The handover server 300 may give an identification code (for example, 3020293) of a vehicle exited from the first handover area 110 to a vehicle entered the second handover area 112 when it is discriminated that the vehicle entered the second handover area 112 is identical to the vehicle exited from the first handover area 110. As a result, the same identification code may be set to the vehicle exited from the first handover area 110 and the vehicle entered the second handover area 112. Accordingly, it is possible to track the vehicle with simple method.

A method of giving the identification code to the vehicle entered the second handover area 112 may give new identification code to the vehicle when the vehicle enters the second handover area 112. Then, the new identification code may be changed to the identification code set to the vehicle exited from the first handover area 110 when the sameness of the vehicles is discriminated. In another embodiment, the identification code set to the vehicle exited from the first handover area 110 may be given to the vehicle entered the second handover area 112 after the sameness of the vehicles is discriminated, without giving the new identification code. A process of giving the identification code may be automatically performed without user's intervention.

To track the vehicle in detail, the vehicle may have different identification codes depending on handover area 110 or 112, but the identification codes may include the same sub identification code.

In an embodiment, the identification code may include another sub identification code for indicating the handover area as well as the same sub identification code.

For example, the identification code set to the vehicle entered the second handover area 112 may be (handover2, 3020293) when the identification code set to the vehicle exited from the first handover area 110 is (handover 1, 3020293). That is, the identification codes for the handover areas 110 and 112 may include the same sub identification code 3020293, and the identification codes may have another sub identification code handover 1 or handover2 for indicating the handover area. As a result, the handover system may detect the sameness of the vehicle and location information of the vehicle through the identification codes. Of course, a sub identification code corresponding to a time as well as the sub identification code corresponding to a space may be further used. In another embodiment, only the sub identification code corresponding to the time may be used without using the sub identification code corresponding to the space.

For another example, the identification code set to the vehicle entered the second handover area 112 may be (handover1+handover2, 3020293) when the identification code set to the vehicle exited from the first handover area 110 is (handover1, 3020293). That is, information concerning handover areas through which the vehicle moves may be included in the identification code. Accordingly, the handover system may detect the sameness of the vehicle and a moving path of the vehicle using only the identification code. As a result, the handover system may track the vehicle more precisely and rapidly.

In another embodiment, the handover server 300 may detect the vehicle exited from the second handover area 112 through analysis of an image transmitted from the second sensor 312 and input information concerning the detected vehicle in a Zone2 exit queue.

Moreover, the handover server 300 may detect the vehicle entered the first handover area 110 through analysis of an image transmitted from the first sensor 310 and input information concerning the detected vehicle to a Zone 1 entrance queue.

Subsequently, the handover server 300 may discriminate whether or not the vehicle entered the first handover area 110 is the vehicle exited from the second handover area 112, by comparing the Zone2 exit queue with the Zone1 entrance queue.

The handover server 300 may give the identification code (for example 3020293) set to the vehicle exited from the second handover area 112 to the vehicle entered the first handover area 110 when it is discriminated that the vehicle entered the first handover area 110 is the vehicle exited from the second handover area 112. As a result, the same identification code may be set to the vehicle exited from the second handover area 112 and the vehicle entered the first handover area 110. Accordingly, it is possible to track the vehicle.

In Brief, the handover server 300 may give the same identification code to the vehicle when the vehicle exited from one of matched handover areas enters the other handover area. That is, the handover server 300 may discriminate the sameness of the vehicle by using only an operation of detecting the exit and the entrance of the vehicle in the handover areas though it does not know detailed information of the vehicle such as kind of the vehicle, etc. As a result, high data throughput may not be required for analyzing the sameness of the vehicle.

Recently, cameras have been installed at elevated positions such as an apartment rooftop. In this case, it is not easy to detect vehicle information because the distance between the camera and the vehicle is far. The handover technique of the disclosure is more effective in this environment.

In above description, the sameness of the vehicle is discriminated by using only the exit and the entrance of the vehicle in the handover areas. Detailed information of the vehicle such as kind of the vehicle, etc. or information concerning road surface may be further used for discriminating the sameness of the vehicle as described below.

In above description, time of the exit of the vehicle from the first handover area 110 and time of the entrance of the vehicle to the second handover area 112 are not considered. It may be discriminated that the entered vehicle and the exited vehicle are the same vehicle only when the exited vehicle enters the second handover area 112 in a preset time of period. If not, it is discriminated that the entered vehicle and the exited vehicle are not same vehicle. For example, another vehicle may enter the second handover area 112 earlier if the vehicle exited from the first handover area 110 has stopped and has not entered the second handover area 112. In this case, an error generates if it is discriminated that the vehicle exited from the first handover area 110 and the vehicle entered the second handover area 112 are the same vehicle. Accordingly, it is efficient that the sameness of the vehicle is discriminated in consideration of the time. That is, the handover system may discriminate the sameness of the vehicle considering the time and the space and give the identification code to the vehicle.

The handover system may be effectively used in a parking lot as shown in FIG. 5, which is not described above.

In the parking lot, an identification code (for example, including vehicle number) may be set to a vehicle if the vehicle number is recognized when the vehicle is entered. The same identification code is set to the vehicle passing through the handover areas 110 and 112, and the same identification code (for example, 23 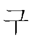 4567) or new identification code (for example, a first zone, 23 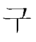 4567, an identification code concerning parking location) including the same sub identification code may be set to the vehicle when it parks the vehicle in a parking space 500. As a result, a number of the entered vehicle, a moving path and parking location in the parking lot may be detected. Accordingly, parking fee is charged considering the entrance time and the exit time, and a driver may also search the parking location by using the identification code to easily find his vehicle.

It is impossible to recognize accurate parking location though the entrance time can be known, if the method of giving the identification code and the handover technique are no used.

FIG. 6 is a view illustrating a handover technique according to another embodiment of the disclosure.

In FIG. 6, the handover areas 110 and 112 should be side by side disposed as shown in FIG. 1, but they may not be aligned due to various causes, e.g. due to the change of sensor sensing direction by external shock.

In this case, information concerning the road 100 as well as an exit of the vehicle from the first handover area 110 and an entrance of the vehicle to the second handover area 112 may be considered.

For example, in the event that the handover areas 110 and 112 are misaligned, the handover server may store an image about a road surface, compare an image about a road surface shown in the handover areas 110 and 112 with the stored image, adjust the alignment depending on the compared result or regard the handover area 110 or 112 as an area before the misaligned.

That is, the handover server may adjust the misalignment of the handover areas 110 and 112 to normal alignment by using information concerning the road surface, and then discriminate the sameness of the vehicle by analyzing the exit of the vehicle from the first handover area 110 and the entrance of the vehicle to the second handover area 112 and give the same identification code to the vehicle.

In other words, the handover server may compensate the alignment or matching of the handover areas 110 and 112 through analysis of the road, and then discriminate the sameness of the vehicle considering the exit and the entrance of the vehicle in the handover areas 110 and 112.

In an embodiment, the analysis of the road may set a feature point to the road surface and be realized through comparing the feature point, to reduce computational cost.

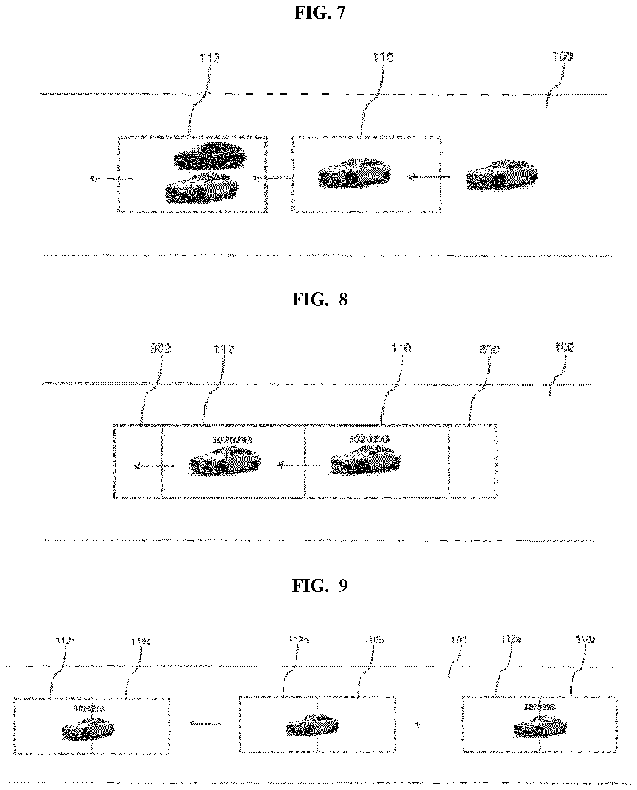

FIG. 7 is a view illustrating a handover technique according to still another embodiment of the disclosure.

In FIG. 7, another vehicle may enter simultaneously or in a slight time difference to the second handover area 112. In this case, it is difficult to discriminate which one of vehicles exited from the first handover area 110 enters first the second handover area 112.

Accordingly, the handover server may detect further detailed information (for example kind of the vehicle) concerning the vehicle in the handover areas 110 and 112, and give the same identification code to the same vehicle as the vehicle exited from the first handover area 110 of the vehicles entered the second handover area 112 according to the detected result.

FIG. 8 is a view illustrating a handover technique according to still another embodiment of the invention.

In the event that it is difficult to discriminate accurately the exit and the entrance of the vehicle due to driving too fast, the second handover area 112 may be expanded by an expansion area 802 or the first handover area 110 may be broadened by an expansion area 800 as shown in FIG. 8. That is, at least one of the handover areas 110 and 112 may be expanded when the vehicle drives with a speed more than preset speed. It is possible to detect the vehicle though the speed of the vehicle is high because the handover area 110 or 112 is expanded, and thus the handover is realized.

In short, the handover server may discriminate the sameness of the vehicle by analyzing the exit and the entrance of the vehicle in the expanded handover areas and give the same identification code to the vehicle.

In another embodiment, an expanded area of the handover area 110 or 112 may differ depending on the speed of the vehicle. For example, the handover area 110 or 112 may be expanded in proportion to the speed of the vehicle.

FIG. 9 is a view illustrating a handover technique according to still another embodiment of the disclosure.

In FIG. 9, the sameness of a vehicle may not be discriminated in specific handover areas 110b and 112b due to failure of a sensor, etc.

In this case, the handover server may discriminate the sameness of the vehicle by comparing handover areas 110a and 110a just before the specific handover areas 110b and 112b with handover areas 110c and 112c just after the specific handover areas 110b and 112b considering a driving direction of the vehicle and give the same identification code to the vehicle.

For example, the handover server may discriminate the sameness of the vehicle through a method of inputting information concerning a vehicle to an entrance queue and an exit queue when the vehicle exited from a 2-1 handover area 112a enters a 1-3 handover area 110c. In this case, discrimination accuracy about the sameness of the vehicle may be downed, and thus the sameness of the vehicle may be discriminated by using further vehicle information.

As a result, the same identification code as an identification code set to a vehicle in a 2-1 handover area 112a may be given to a vehicle in a 1-3 handover area 110c and a 2-3 handover area 112c though it is not given to a vehicle in the 1-2 handover area 110b and a 2-2 handover area 112b. Accordingly, it is possible to track the vehicle continuously using the exit and the entrance of the vehicle in handover areas before a specific handover area and handover areas after the specific handover area though the tracking of the vehicle is cut off in-between.

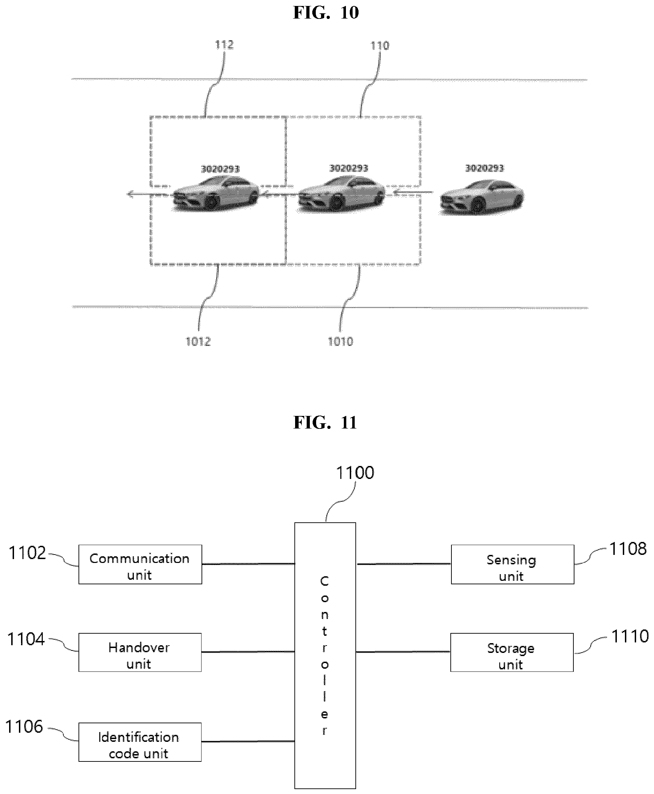

FIG. 10 is a view illustrating a handover technique according to still another embodiment of the disclosure.

In FIG. 10, in the event that a vehicle is included in both of handovers 110 and 1010 or 112 and 1012 disposed up and down, the handover server may not discriminate the sameness of the vehicle using only the exit and the entrance of the vehicle in the handover areas 110 and 112 but discriminate the sameness of the vehicle by using further detailed information of the vehicle such as kind of the vehicle, etc.

FIG. 11 is a block diagram illustrating schematically a handover server according to an embodiment of the disclosure.

In FIG. 11, the handover server (computing device) of the present embodiment may include a controller 1100, a communication unit 1102, a handover unit 1104, an identification code unit 1106, a sensing unit 1108 and a storage unit 1110.

The communication unit 1102 is a communication path with sensors for monitoring handover areas.

The handover unit 1104 may discriminate whether or not vehicles in the handover areas are the same vehicle by using an exit of the vehicle from a first handover area and an entrance of the vehicle to a second handover area, and give an identification code set to the vehicle in the first handover area to the vehicle in the second handover area when it is discriminated that the vehicles in the handover areas are the same vehicle.

Additionally, the handover unit 1104 may obtain further detailed information of the vehicle such as kind of the vehicle, etc. when it is difficult to discriminate the sameness of the vehicles by using only the exit and the entrance of the vehicle in the handover areas, and discriminate the sameness of the vehicles further considering the obtained detailed information of the vehicle.

Moreover, the handover unit 1104 may compensate matching of the handover areas by using road information when the handover areas are mismatched, and then discriminate the sameness of the vehicles in consideration of the exit and the entrance of the vehicles in the handover areas.

Furthermore, the handover unit 1104 may expand the handover areas when the vehicle drives through the handover areas with a speed more than preset speed, and discriminate the sameness of the vehicles considering an exit and an entrance of the vehicles in the expanded handover areas.

The identification code unit 1106 may set an identification code to a vehicle in the handover area, and give the same identification code as the identification code set to the vehicle exited from a prior handover area or a matched handover area to the vehicle entered the handover area when it is discriminated that the vehicle entered the handover area is the vehicle exited from the prior handover area or the matched handover area.

Of course, new identification code may be set to a vehicle entered newly the handover area.

The sensing unit 1108 may control operation of the sensors for monitoring the handover areas.

The storage unit 1110 may store various data such as information concerning the handover area, information concerning the identification code, the detailed information concerning the vehicle and so on.

The controller 1100 may control operation of elements in the handover server.

In above description, the handover server performs the handover. However, one or more sensors may perform the handover. That is, the sensor may perform the handover in above embodiments without using the handover server.

For example, a first sensor for obtaining a first image by monitoring a first handover area may include a communication unit which is a communication path with a second sensor for monitoring a second handover area and a handover unit for obtaining a second image from the second sensor, detecting an exit of a moving object from the first handover area through the obtained first image, detecting an entrance of the moving object to the second handover area through the obtained second image and discriminating whether or not the moving object entered the second handover area is the same moving object as the moving object exited from the first handover area by using the detected exit and the detected entrance. Here, the second handover area matches with the first handover area.

For another example, a second sensor for obtaining a second image by monitoring a second handover area may include a communication unit which is a communication path with a first sensor for monitoring a first handover area and a handover unit for obtaining a first image from the first sensor, detecting an exit of a moving object from the first handover area through the obtained first image, detecting entrance of the moving object to the second handover area through the obtained second image and discriminating whether or not the moving object entered the second handover area is the same moving object as the moving object exited from the first handover area by using the detected exit and the detected entrance. Here, the second handover area matches with the first handover area.

Various methods of giving identification code as well as discrimination about the sameness of the moving object may be applied.

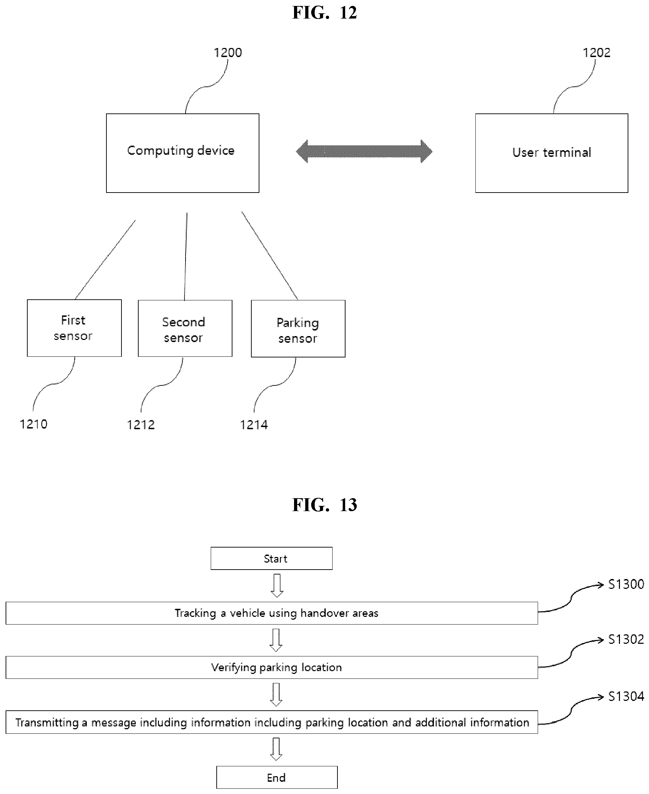

FIG. 12 is a block diagram illustrating a handover system according to still another embodiment of the disclosure.

In FIG. 12, a handover system of the present embodiment may be applied to an apartment complex, a parking lot, etc., and include a computing device 1200, a user terminal 1202, a first sensor 1210, a second sensor 1212 and a parking sensor 1214.

The computing device 1200 may discriminate the sameness of a vehicle through an exit and an entrance of the vehicle in handover areas monitored by the first sensor 1210 and the second sensor 1212 and may give the same identification code to the vehicle. Since the handover process has been documented at detail in above embodiments, its description is omitted here.

Furthermore, the computing device 1200 may be connected to the parking sensor 1214 and verify parking information such as parking location of a vehicle parked after passing through the handover areas. For example, the parking sensor 1214 may be a camera, detect a number (vehicle number) of the parked vehicle and transmit the detected result to the computing device 1200.

As a result, the computing device 1200 may obtain a vehicle number when a vehicle is entered, detect a moving path of the vehicle through handover areas and verify parking location. The computing device 1200 may detect the moving path and parking location of the entered vehicle when an identification code of the vehicle in the handover areas includes the vehicle number and the same identification code as the identification code set to the vehicle in the handover area or an identification code including the same sub identification code as the identification code set to the vehicle in the handover area is given to a parked vehicle when the vehicle is parked.

In an embodiment, the computing device 1200 may be connected to the user terminal 1202 or a household terminal, and transmit a message including parking location, parking available area, notice, illegal parking guide, movement order from disabled person parking space or parking fee, etc. to the user terminal 1202, the household terminal or a sharing terminal (for example a display established on a parking lot of an apartment). As a result, the user may find easily his vehicle by recognizing the parking location of the vehicle.

For example, in the event that the computing device 1200 is an apartment management server, the computing device 1200 may provide information concerning parking location to the user terminal when a resident (user) in the apartment is parking, and thus the user may search easily his vehicle. Especially, the user does not know his parking location if a designated driver is parking when the user is drunk. In this case, the user may easily recognize his parking location through a message when he goes to work next day because the computing device 1200 provides the message including the information concerning the parking location of the vehicle to the user terminal 1202.

For another example, the computing device 1200 may provide various information such as a moving path of a vehicle, an image in a handover area, a parking time, etc. to an external server, e.g. a police server, etc. when a parked vehicle is an unregistered vehicle or a vehicle designated by an investigative agency. As a result, a policeman may better track a criminal.

FIG. 13 is a flowchart illustrating a process of providing a parking service using a handover system according to an embodiment of the disclosure.

In FIG. 13, in a step of S 1300, the computing device 1200 may obtain information (vehicle number, etc.) concerning an entered vehicle when the vehicle enters in an indoor parking lot such as an apartment or an outdoor parking lot, and track the vehicle according as the vehicle moves through handover areas. Here, the same identification code or an identification code including the same sub identification code may be set to the same vehicle in the handover areas.

In a step of S 1302, the computing device 1200 may detect parking location of the vehicle according to information provided from the parking sensor 1214 when the vehicle is parked.

As a result, the computing device 1200 may recognize entrance information of the vehicle including the vehicle number, etc., a moving path of the vehicle and the parking location of the vehicle. Especially, the same sub identification code or the same identification code including the vehicle number may be set to the vehicle.

In a step of S1304, the computing device 1200 may provide the recognized entrance information, the recognized moving path or the recognized parking location to the user, e.g. resident in the apartment through the user terminal 1202. To perform this operation, the computing device 1200 may store in advance a phone number of the user, etc.

Of course, the information such as the parking location, etc. may be provided to the household terminal or the sharing terminal if not the user terminal 1202.

In an embodiment, the computing device 1200 may provide a message including additional information as well as the information concerning the parking location to the user. For example, the additional information may include an advertisement, an image/sound, an identification code, unpaid management fee, notice, a movement order due to parking in a parking space for a disabled person or parking fee and so on.

Here, management fee or parking fee of the user may be discounted when the user views the advertisement or the image/sound.

In another embodiment, the additional information may include parking fee, parking available time, visiting household, an identification code, etc. when the vehicle is not a vehicle of a member in a specific group (for example, resident of an apartment).

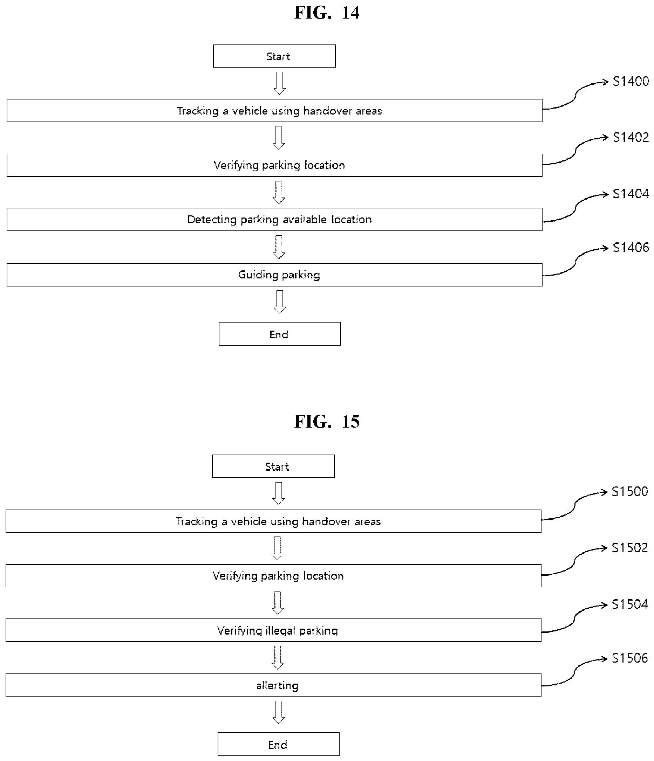

FIG. 14 is a flowchart illustrating a process of providing a parking service using a handover system according to another embodiment of the disclosure.

In FIG. 14, in a step of S 1400, the computing device 1200 may obtain information (vehicle number, etc.) concerning an entered vehicle when the vehicle enters in an indoor parking lot such as an apartment or an outdoor parking lot, and track the vehicle according as the vehicle moves through handover areas. Here, the same identification code or an identification code including the same sub identification code may be set to the same vehicle in the handover areas.

In a step of S 1402, the computing device 1200 may detect parking location of the vehicle according to information provided from the parking sensor 1214 when the vehicle is parked. As a result, the computing device 1200 may recognize entrance information of the vehicle including the vehicle number, etc., a moving path of the vehicle and the parking location of the vehicle. Especially, the same sub identification code or the same identification code including the vehicle number may be set to the vehicle.

In a step of S 1404, the computing device 1200 may detect parking situation depending on messages provided from the user terminals 1202, thereby recognizing parking available location.

In a step of S1406, the computing device 1200 may provide information concerning the recognized parking available location to a vehicle entered newly to assist to park conveniently.

The user may spend prolonged time for parking if parking space is inadequate. However, if the handover system is used, the user can know available parking space when his vehicle enters, and thus the user may park easily.

It is impossible to use a specific parking space if a cleaning, etc. is performed though adequate parking space exists. In this case, it is impossible to park in the specific parking space though the user reaches the specific parking space and so the user should search another parking space. If the handover system of the disclosure is employed, the user may search easily vacant parking space and park the vehicle in the vacant parking space, and thus user's convenience is enhanced.

The users tend to park near his building of an apartment. Accordingly, the computing device 1200 may recognize in advance user's favorite parking location based on an accumulated data and guide the user to the preferred parking location or surrounding vacant parking space.

For another example, the user may designate a desired parking location to the computing device 1200. In this case, the computing device 1200 may guide preferably vacant parking space near the desired parking location to the user.

Accordingly, convenience of the user may be maximized.

Additionally, the computing device 1200 may give guides to a path to the designated parking location.

Furthermore, the computing device 1200 may guide vacant parking space at which a visitor goes easily to desired building of the apartment to the visitor, the desired building being recognized when a vehicle of the visitor enters.

FIG. 15 is a flowchart illustrating a process of guiding a parking using a handover system according to still another embodiment of the disclosure.

In FIG. 15, in a step of S 1500, the computing device 1200 may obtain information (vehicle number, etc.) concerning an entered vehicle when the vehicle enters in a parking lot, and track the vehicle according as the vehicle moves through handover areas.

In a step of S 1502, the computing device 1200 may detect parking location of the vehicle according to information provided from the parking sensor 1214 when the vehicle is parked.

The computing device 1200 may discriminate whether or not the parking is illegal parking in a step of S 1504, and it may provide an alert message through the user terminal 1202 to move to other location when it is discriminated that the parking is illegal parking in a step of S 1506.

For example, the computing device 1200 may send an alert message to a user to move to other location when the user parks in a disabled person parking space or parks in a parking space for an electric car.

Accordingly, an apartment security guard need not go around to find illegal parking and need not adhere an alert sticker to a vehicle.

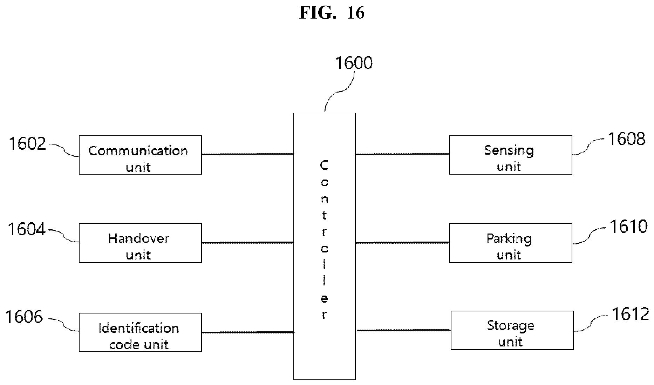

FIG. 16 is a block diagram illustrating a computing device according to an embodiment of the disclosure.

In FIG. 16, the computing device of the present embodiment may include a controller 1600, a communication unit 1602, a handover unit 1604, an identification code unit 1606, a sensing unit 1608, a parking unit 1610 and a storage unit 1612.

The communication unit 1602 is a communication path with a first sensor and a second sensor for monitoring handover areas and a third sensor for monitoring parking space.

The handover unit 1604 may discriminate the sameness of a vehicle in the handover areas by using an exit of the vehicle from the first handover area and an entrance of the vehicle to the second handover area, and give an identification code set to the vehicle in the first handover area to the vehicle in the second handover area when it is discriminated that the vehicle entered the second handover area is the same vehicle as the vehicle exited from the first handover area. Further handover control is mentioned in above embodiments.

The identification code unit 1606 may set the identification code to the vehicle in the handover area, specifically give the same identification code set to the vehicle exited from prior handover area or matched handover area to an entered vehicle when it is determined that the entered vehicle is the vehicle exited from the prior handover area or the matched handover.

The sensing unit 1608 may control operation of the sensors for monitoring the handover areas.

The parking unit 1610 may detect a moving path of the vehicle through the handover process, recognize parking information such as parking location, etc. through the parking sensor, and guide parking location to the user based on the recognized parking information, guide parking available location to an entered vehicle, provide a movement order to an illegal parking vehicle to go to other location or provide the detected moving path to the police station, etc.

The storage unit 1612 may store various data such as information concerning the handover area, information concerning the identification code, detailed information of the vehicle, parking information and so on.

The controller 1600 controls operation of elements in the computing device.

Components in the embodiments described above can be easily understood from the perspective of processes. That is, each component can also be understood as an individual process. Likewise, processes in the embodiments described above can be easily understood from the perspective of components.

Also, the technical features described above can be implemented in the form of program instructions that may be performed using various computer means and can be recorded in a computer-readable medium. Such a computer-readable medium can include program instructions, data files, data structures, etc., alone or in combination. The program instructions recorded on the medium can be designed and configured specifically for the present invention or can be a type of medium known to and used by the skilled person in the field of computer software. Examples of a computer-readable medium may include magnetic media such as hard disks, floppy disks, magnetic tapes, etc., optical media such as CD-ROM's, DVD's, etc., magneto-optical media such as floptical disks, etc., and hardware devices such as ROM, RAM, flash memory, etc. Examples of the program of instructions may include not only machine language codes produced by a compiler but also high-level language codes that can be executed by a computer through the use of an interpreter, etc. The hardware mentioned above can be made to operate as one or more software modules that perform the actions of the embodiments of the invention, and vice versa.

The embodiments of the invention described above are disclosed only for illustrative purposes. A person having ordinary skill in the art would be able to make various modifications, alterations, and additions without departing from the spirit and scope of the invention, but it is to be appreciated that such modifications, alterations, and additions are encompassed by the scope of claims set forth below.

## Claims

1. A computing device comprising:
a communication unit which is a communication path with a first sensor for monitoring a first handover area and a second sensor for monitoring a second handover area; and
a handover unit configured to obtain a first image from the first sensor, obtain a second image from the second sensor, detect an exit of a moving object from the first handover area through the obtained first image, detect an entrance of a moving object to the second handover area through the obtained second image and discriminate whether or not the moving object entered the second handover area is the same moving object as the moving object exited from the first handover area by using the detected entrance of the moving object and the detected exit of the moving object,
wherein the second handover area is matched with the first handover area.

2. The computing device of claim 1, wherein the handover areas are disposed in a longitudinal direction of a road,
and wherein the same identification code as an identification code set to the moving object in the first handover area or an identification code including an sub identification code which is identical to the identification code set to the moving object in the first handover area is given to the moving object entered in the second handover area, when it is discriminated that the moving object entered the second handover area is the same moving object as the moving object exited from the first handover area.

3. The computing device of claim 1, wherein information concerning the moving object exited from the first handover area is inputted to an exit queue, and information concerning the moving object entered the second handover area is inputted to an entrance queue,
and wherein the handover unit discriminates whether or not the moving object entered the second handover area is the same moving object as the moving object exited from the first handover area by comparing temporally and spatially the exit queue with the entrance queue.

4. The computing device of claim 1, wherein the handover unit compensates an align or matching of the handover areas through analysis of a road when the handover areas are misaligned, and then it discriminates through the exit of the moving object from the first handover area and the entrance of the moving object to the second handover area whether or not the moving object entered the second handover area is the same moving object as the moving object exited from the first handover area.

5. The computing device of claim 1, wherein the handover unit detects the same moving object as the moving object exited from the first handover area of moving objects entered the second handover area by using further information concerning the moving objects including kind or number of the moving objects when another moving object as well as the moving object are entered the second handover area, and gives the same identification code as an identification code set to the moving object exited from the first handover area to the detected moving object.

6. The computing device of claim 1, wherein the handover unit expands the first handover area or the second handover area when a speed of the moving object moving through the first handover area or the second handover area is more than preset speed, and discriminates based on the expanded handover area whether or not the moving object entered the second handover area is the same moving object as the moving object exited from the first handover area.

7. The computing device of claim 1, further comprising:
an identification code unit configured to set an identification code to the moving object,
wherein the handover unit gives an identification code set to a moving object exited from a 2-1 handover area to a moving object entered a 1-3 handover area by comparing the moving object exited from the 2-1 handover area and the moving object entered the 1-3 handover area though an identification code is not set to an moving object exited from a 2-2 handover area, when the sameness of an moving object in a 1-2 handover area and the 2-2 handover area is not discriminated or an identification code is not set to the moving object while a 1-1 handover area and the 2-1 handover area matched with the 1-1 handover area, the 1-2 handover area and the 2-2 handover area matched with the 1-2 handover area and the 1-3 handover area and a 2-3 handover area matched with the 1-3 handover area are sequentially disposed.

8. A sensor used in a handover system for obtaining a first image by monitoring a first handover area, the sensor comprising:
a communication unit which is a communication path with another sensor for monitoring a second handover area; and
a handover unit configured to obtain a second image from the another sensor, detect an exit of a moving object from one of the handover areas by using one of the obtained images, detect an entrance of the moving object to the other handover area of the handover areas by using another image of the obtained images, and discriminate whether or not the moving object entered the other handover area is the same moving object as the moving object exited from the one of the handover areas by using the detected exit of the moving object and the detected entrance of the moving object,
wherein the handover areas are matched each other.

9. The sensor of claim 8, wherein the handover area is disposed in a longitudinal direction of a road,
and wherein the same identification code as an identification code set to the moving object in the one of the handover areas or an identification code including an sub identification code which is identical to the identification code set to the moving object in the one of the handover areas is given to the moving object entered in the other handover area, when it is discriminated that the moving object entered the other handover area is the same moving object as the moving object exited from the one of the handover areas.

10. A computing device comprising:
a communication unit which is a communication path with a first sensor for monitoring a first handover area, a second sensor for monitoring a second handover area or a parking sensor for monitoring parking location; and
a parking unit configured to obtain a number of a moving object when the moving object is entered and receive parking information of the moving object from the parking sensor when the moving object is parked in a parking space after moving through the handover areas,
wherein the same identification code as an identification code set to the entered moving object or an identification code including a sub identification code which is identical to the identification code set to the entered moving object is given to the moving object moving through the handover areas or the parked moving object.

11. The computing device of claim 10, wherein the parking unit provides a message including parking location to a terminal related to the moving object, a household terminal, or a sharing terminal, based on the parking information.

12. The computing device of claim 11, wherein the provided message includes one or more of advertisement, identification code, unpaid management fee, notice, movement order due to parking in a disabled person parking space or parking fee as well as information concerning the parking location,
and wherein corresponding management fee or parking fee is discounted when a user of the terminal views an image or a sound included in the message.

13. The computing device of claim 10, wherein the computing device is used for a parking service,
and wherein the parking unit detects a parking available location based on parking information of moving objects parked in the parking space, provides a message including information concerning the detected parking available location to an entered moving object, a terminal related to the entered moving object or a terminal related to the parking service, and
guides preferably a parking available location near a building of an apartment where a user of the entered moving object lives or a parking available location close to a desired parking location preset by the user.

14. The computing device of claim 10, wherein the parking unit provides a message including a movement order to another location to a user of the moving object when a moving object parks illegally in the parking space, and transmits the image obtained in the handover area or parking information to an external server when the moving object is an unregistered vehicle or pre-designated vehicle.

15. The computing device of claim 10, further comprising:
a handover unit configured to detect an exit of a moving object from one of the handover areas by using one of a first image obtained by the first sensor and a second image obtained by the second sensor, detect an entrance of the moving object to the other handover area of the handover areas by using the other image of the obtained images, and discriminate whether or not the moving object entered the other handover area is the same moving object as the moving object exited from the one of the handover areas by using the detected exit of the moving object and the detected entrance of the moving object, and
an identification unit configured to give the same identification code as an identification code set to the moving object in one of the handover areas or an identification code including the same sub identification code as the identification code set to the moving object to the moving object entered the other handover area when it is discriminated that the moving object entered the other handover area is identical to the moving object exited from one of the handover areas, and give the same identification code as the identification code set to the moving object in the other handover area or an identification code including the same sub identification code as the identification code set to the moving object to a moving object parking in the parking space.
